Europäisches Patentamt

European Patent Office

Office européen des brevets

(11) Publication number : **0 514 031 A1**

# (12) EUROPEAN PATENT APPLICATION

(21) Application number : **92303677.6**

(22) Date of filing : **23.04.92**

(51) Int. Cl.$^5$ : **B29C 67/12, B29D 31/00, H05F 3/02**

(30) Priority : **26.04.91 GB 9108992**

(43) Date of publication of application :
**19.11.92 Bulletin 92/47**

(84) Designated Contracting States :
**DE FR GB SE**

(71) Applicant : **THE AMTICO COMPANY LIMITED**
**Bath Road**
**Bridgwater, Somerset TA6 4PA (GB)**

(72) Inventor : **McLeod, John**
**35 Mapleton Avenue**
**Coventry, CV6 2AZ (GB)**

(74) Representative : **Newby, John Ross et al**
**J.Y. & G.W. Johnson Furnival House 14/18 High**
**Holborn**
**London WC1V 6DE (GB)**

(54) **Tiles.**

(57)   A tile (10) is given electrostatic dissipative properties by forming a back ply (11) of electrostatic dissipative thermoplastic material with raised areas (12) to define recesses therebetween, the recesses being filled with moulded-in slugs (18).

FIG.1

EP 0 514 031 A1

This invention relates to the production of tiles from synthetic plastics material, for example, floor tiles, and in particular to the production of electrostatic dissipative tiles.

Some plastics floor tiles are at present manufactured by using slugs, that is pieces of plastics material, which are bonded to a plastics back ply leaving gaps between the slugs through which the back ply is visible. In this way a tile can be manufactured which carries a pattern created by the arrangement of the slugs and the area of each slug in this pattern is clearly shown by the gap surrounding it and separating it from other slugs and in which the material of the back ply is visible. Such a manufacturing procedure is particularly useful in producing tiles carrying a pattern which simulates wooden parquet flooring.

A disadvantage of tiles produced in this way is that the gaps between slugs, essential to achieve the pattern effect desired, are receptacles for dirt particles and are difficult to clean. This can render such tiles unacceptable or undesirable for use in some situations such as hospitals, food stores or kitchens since the dirt retained can be a reservoir for bacteria. It can also be disfiguring and may render the tile unattractive.

The invention described in our GB-A-2,198,165 provides a method of manufacturing tiles which can enable a similar patterned appearance to that described above to be achieved but without the disadvantage of leaving gaps between the slugs which can collect dirt but which also enables new pattern effects to be achieved, especially if hygiene requirements are set no higher than with previous tiles.

There is a need in hospitals (particularly in operating theatres) and in factories, shops and supermarkets which use explosive gases or sensitive apparatus, equipment, or computers, to eliminate static electricity. There is therefore a need for electrostatic dissipative floors safely to prevent electrostatic build-up.

One attempt to provide electrostatic dissipative floors has been to make thermoplastic floor tiles with reduced electrical surface and volume resistivities. In the main, this has involved incorporating materials such as carbon black particles in the coloured face of each tile with the result that the tile has the appearance of a coloured background with unsightly black streaks. A further problem has been that it is difficult to ensure that build-up of static electricity on one tile is conducted to adjoining tiles because of the random dispersion of the electrically conductive particles incorporated in the compound from which the tile is made. To improve conductivity, the amount of electrically conductive particles can be increased but the unsightly streaks become more prominent. One way of masking the unsightly streaks is to select the background colour to match the colour of the streaks. Since carbon black is commonly used as the electrically conductive particles, this means that the tiles themselves have to be of dark colours. In many applications a totally black floor would be oppressive, uninviting and unacceptable.

In its method aspect, the present invention is defined in the following claim 1 and makes use of the method of manufacture, and the product, of the invention described in GB-A-2,198,165 to enable attractive electrostatic dissipative tiles to be manufactured.

The invention also includes an electrostatic dissipative thermoplastics tile and this aspect of the invention is featured in the following claims 6 to 14.

The invention will be further described, by way of example, with reference to the accompanying drawing in which:-

Figure 1 is a plan of part of a tile according to the invention,

Figure 2 is a plan of part of another tile according to the invention,

Figure 3 is a cross-section through part of a mould for use in the production of tiles according to the invention,

Figure 4 is a cross-section through part of a back ply for the tile of Figure 1, and

Figure 5 is a cross-section through part of the tile of Figure 1 taken on the line V-V of Figure 1.

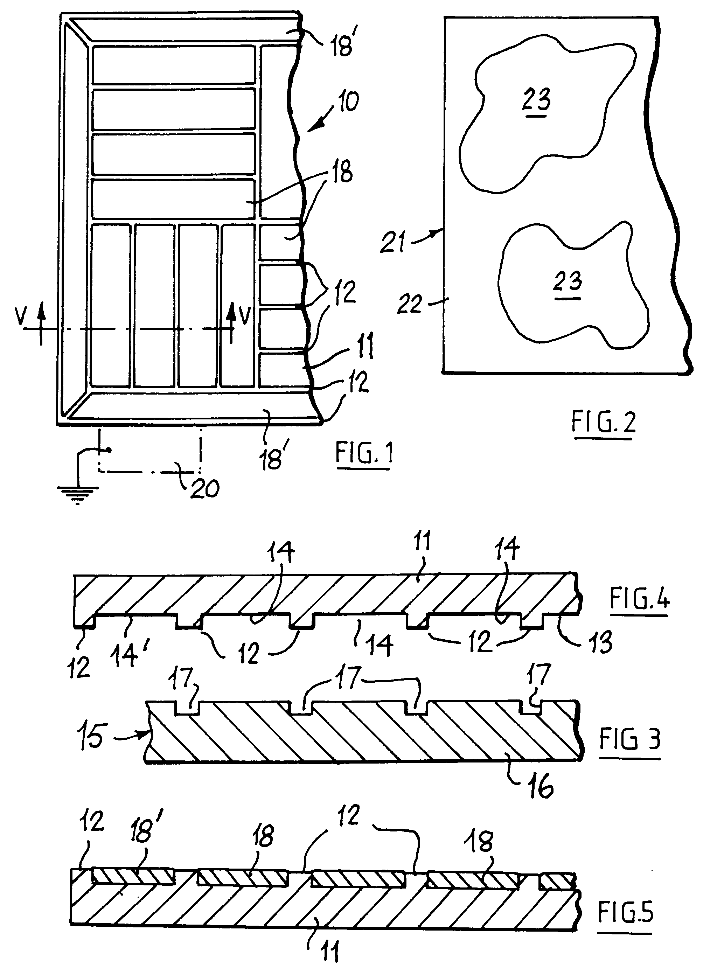

The tile 10 of Figures 1 and 5 is a floor tile made of polyvinyl chloride (PVC), a thermoplastic material, and has a pattern which simulates wooden parquet flooring. The tile 10 comprises a back ply 11 of black PVC which contains 5 to 70% by volume of an electrically conductive material such as carbon black particles (Figure 4) which is formed with raised areas 12 on one surface 13. In the back ply 11 the, precise volume of electrically conductive particles used in the PVC depends on the degree of electrostatic dissipation required. The raised areas 12 define between them a number of recesses 14 on the surface 13 and in the embodiment shown comprise a series of parallel, narrow ribs, the ribs of adjacent series being arranged at right angles to one another in such a way that each recess 14 has a rectangular shape, each series of recesses 14 comprises four parallel rectangles and each tile 10 has four series of recesses 14. Around the perimeter of each tile 10 are four trapeziform recesses 14', one along each side of the tile, which are bounded by raised areas 12, on their inner and outer edges and at each tapering end. In this way, the electrostatic dissipative raised areas 12 of one tile contact those of adjacent tiles to improve dissipation of electrostatic charges from one tile to adjacent tiles. It is to be understood, that providing the electrostatic dissipative backing ply of each tile contacts that of adjacent tiles, the raised areas 12 at the outer perimeter of each tile may be omitted.

The tile of Figure 1 is made in a platen press constructed according to known principles and adapted to receive several moulds at one time. To make back plies for tiles, each mould is placed on a platen in the press with a sheet of PVC which incorporates the electrically conductive particles, on top of the mould. The platens, originally spaced apart vertically, are urged towards one another by a ram and are heated. Thus each mould is pressed towards the platen immediately above it by the platen immediately below it, and each sheet of electrostatic dissipative PVC is compressed between the associated mould and the platen immediately above it. Each sheet of static dissipative PVC is thus embossed with the pattern on the mould.

Part of a mould 15 for the back ply of a tile according to the present embodiment of the invention is shown in Figure 3 and comprises a metal platen 16 formed with grooves 17 for moulding the ribs 12.

When the back ply 11 has been moulded, it is inserted into another press on a flat mould after slugs 18 of PVC have been inserted, one into each recess 14 and slugs 18′ one into each recess 14′. Each slug 18, 18′ may be electrically conductive (e.g PVC containing electrically conductive particles such as metal or carbon black) or may be electrically non-conductive, and is shaped to fit snugly into a corresponding recess 14 or 14′ with close tolerance and in the case of the present rectangular recesses 14 and slugs 18, all the rectangular recesses and slugs are the same size and shape.

After insertion in the press, as mentioned, the slugs 18 and 18′ and back ply 11 are bonded to one another by a treatment comprising applying heat and pressure to them in the press. This softens the thermoplastics material of each and causes them to adhere together. The tile 10 is then complete except that normally sheets of electrostatic dissipative PVC large enough to provide the back plies of a number of individual tiles, (and correspondingly large moulds and presses) will be used so that after bonding of the slugs to a large sheet of electrically conductive PVC, the sheet of PVC will require to be cut to divide it into individual tiles 10.

After bonding of the back ply 11 to the slugs 18 and 18′, the raised areas 12 are advantageously flush with the outer surfaces of the slugs and are separated by such distances that a person standing on the tile, or any object placed on the tile, will touch one or more of the raised areas 12 so that any electrostatic charge carried by that person will be dissipated through the raised area 12 and back ply 11 of the tile that is touched and all adjoining tiles. At some convenient region the whole floor or sections of the floor can be electrically earthed by any convenient means and an earthing plate is shown schematically in chain lines at 20 in Figure 1. In the embodiment just described, using a black PVC for the back ply 11 and slugs which carry a pattern simulating a wooden surface, the resulting tiles simulate parquet flooring but the spaces between the individual slugs, being filled with the ribs constituted by the raised areas 12, do not harbour significant quantities of dirt in use and the whole surface of the tile being flush and without substantial recesses is easy to clean and can be maintained to standards of hygiene which make it more acceptable for use in some applications for which previous tiles with parquet floor patterning were not acceptable.

Tiles according to the invention are not restricted to parquet floor patterns or to other geometrically regular patterns or to raised areas constituted by narrow ribs such as the raised areas 12 (see Figures 1,4 and 5). The invention thus extends to a plastics tile including a plurality of recesses filled by a plurality of slugs producing a patterned effect at the surface of the tile. To ensure that an electrically conductive path is maintained, it is only necessary that the raised areas 12 are close enough together to ensure that someone standing on each tile (or objects placed on the tile) will contact the raised areas and that the backing ply of each tile touches the backing plies of adjoining tiles.

Figure 2, for example shows part of a tile 21 in which raised areas 22 on an electrically conductive back ply of the tile are continuous with one another (as are the ribs constituting the raised areas 12) and define irregularly shaped recesses which receive correspondingly shaped slugs 23 to a close tolerance, so that the surfaces of the slugs 23 are flush, or approximately flush, with the raised areas 22 and there are substantially no gaps between the slugs and the raised areas. By choosing the material of the back ply and raised areas 22 of one colour and the slugs 23 of another colour, or several different colours, attractive patterns can be achieved.

If desired, more than one slug may be located in any one or more recesses on the back ply to further diversify the types of pattern achievable. Tiles according to the invention may be used for purposes other than flooring.

It is to be understood that other conductive particles such as metal particles (eg copper) could be used instead of carbon black. In the case of copper particles, the backing ply and raised areas 12 (or at least the raised areas 12) could be coloured with a pigment to produce a pleasing copper or brown effect between the slugs.

## Claims

1. A method of making a electrostatic dissipative patterned thermoplastics tile (10;21) said method including the following steps:

   (a) moulding a back ply (11;22) for said tile from thermoplastic material to exhibit a pattern of raised areas (12) on one surface which define at least one recess (14, 14′) for reception of at least one slug (18, 18′);

   (b) following the formation of said pattern of raised areas and said at least one recess, taking the moulded back ply (11;22) and inserting in said at least one recess (14, 14') one or more correspondingly shaped slugs (18;23) of thermoplastic material;

(c) placing the moulded back ply (11;22) with the inserted slug or slugs (18, 18';23) in a press and therein applying heat and pressure to said back ply and slug(s) to soften the respective thermoplastic materials and fuse them together; and

(d) removing from the press the resulting patterned thermoplastics tile (10;21) characterised in that to give the tile electrostatic dissipative properties the material from which the back ply (11;22) is moulded is an electrostatic dissipative thermoplastic material whereby electrostatic dissipative regions are formed by said pattern of raised areas which raised areas are interconnected by an electrostatic dissipative back ply.

2. A method according to claim 1, characterised in that the electrostatic dissipative thermoplastic material comprises polyvinyl chloride containing electrically conductive particles.

3. A method according to claim 1 or 2, characterised in that the slug (18, 18';23) or slugs are also made of electrostatic dissipative thermoplastic material.

4. A method according to claim 3, characterised in that each slug (18, 18';23) is made of an electrostatic dissipative thermoplastic material comprising polyvinyl chloride containing electrically conductive particles.

5. A method according to claim 1 or 2, characterised in that the or each slug (18, 18';23) is made of electrically non-conductive thermoplastic material.

6. An electrostatically dissipative patterned thermoplastics tile (10;21) comprising a back ply having a front surface (13) pre-moulded with a pattern of raised areas (12) on said front surface which define at least one recess (14) in the or each of which is located at least one slug (18) of thermoplastic material which correspond(s) to the shape of the recess and is/are thermoplastically fused to the back ply in the or each said recess, characterised in that the back ply (11;22) is moulded from an electrostatically dissipative thermoplastic material.

7. A thermoplastics tile according to claim 6 or claim 7, characterised in that the electrostatically dissipative thermoplastic material comprises 5 to 70% by volume of electrically conductive particles.

8. A thermoplastics tile according to claim 6 or claim 7, characterised in that the or each slug (18;23) is also made of an electrostatic dissipative thermoplastic material.

9. A thermoplastics tile according to claim 8, characterised in that the or each slug is made of a thermoplastic material comprising 5 to 70% by volume of electrically conductive particles.

10. A thermoplastics tile according to claim 6 or claim 7, characterised in that the or each slug is made of a non-conductive thermoplastic material.

11. A thermoplastics tile according to any one of claims 6 to 10, characterised in that said at least one slug is flush with said raised areas of the back ply.

12. A thermoplastics tile according to any one of claims 6 to 11, characterised in that the thermoplastic material of both the or each slug and the back ply includes polyvinyl chloride.

13. A thermoplastics tile according to any one of claims 6 to 12, characterised in that it simulates wooden parquet flooring wherein the raised areas of the back ply include narrow ribs and a plurality of slugs of a geometric shape coloured and patterned like wood and located between said narrow ribs.

14. A thermoplastics tile according to any one of claims 6 to 13, characterised in that there are a plurality of recesses filled by a plurality of slugs producing a patterned effect at the surface of the tile.

18'

10

18

12

11

12

18'

V ↑    ↑ V

20

FIG. 1

21

22

23

23

FIG. 2

14    11    14

FIG. 4

12    14'    12    14    12    13

17    17    17

15

FIG 3

16

12    18'    18    12    18

FIG. 5

11

European Patent Office

# EUROPEAN SEARCH REPORT

Application Number

EP 92 30 3677

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-2 457 299 (BIEMESDERFER) <br> * claim 1; figure 6 * <br> --- | 1-14 | B29C67/12 <br> B29D31/00 <br> H05F3/02 |
| Y,D | GB-A-2 198 165 (COURTAULDS PLC) <br> * claim 1; figure 5 * <br> --- | 1-14 | |
| A | WO-A-8 500 723 (DENNISON MANUFACTURING COMPANY) <br> * claim 1; figure 2 * <br> --- | 1-14 | |
| A | US-A-4 710 415 (SLOSBERG ET AL) <br> * claims 1,17; figure 2 * <br> ----- | 1-14 | |
| | | | TECHNICAL FIELDS SEARCHED (Int. Cl.5 ) <br><br> B29C <br> B29D <br> H05F |

The present search report has been drawn up for all claims

| Place of search | Date of completion of the search | Examiner |
|---|---|---|
| THE HAGUE | 25 AUGUST 1992 | KIRSTEN K.R.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document